Europäisches Patentamt

European Patent Office

Office européen des brevets

(11) Veröffentlichungsnummer : **0 088 471**
**B1**

(12) # EUROPÄISCHE PATENTSCHRIFT

(45) Veröffentlichungstag der Patentschrift :
07.08.85

(51) Int. Cl.⁴ : **C 01 D   3/06**

(21) Anmeldenummer : 83200290.1

(22) Anmeldetag : 28.02.83

(54) Verfahren zur Herstellung von grobkristallinem, reinem Kaliumchlorid.

(30) Priorität : 04.03.82 DE 3207778

(43) Veröffentlichungstag der Anmeldung :
14.09.83 Patentblatt 83/37

(45) Bekanntmachung des Hinweises auf die Patenterteilung : 07.08.85 Patentblatt 85/32

(84) Benannte Vertragsstaaten :
DE FR NL

(56) Entgegenhaltungen :
DE-C-  950 785
CHEMICAL ABSTRACTS, Band 70, Nr. 22, 2. Juni 1969, Seite 113, Nr. 98359s, Columbus, Ohio, USA S. MARSCHNER: "Cooling of solutions in the potash industry" CHEMICAL ABSTRACTS, Band 70, Nr. 22, 2. Juni 1969, Seite 113, Nr. 98360k, Columbus, Ohio, USA H. SCHERZBERG et al.: "Application of the saturation process in the Volkenroda and "Thomas" Muentzes"' potash works"

(73) Patentinhaber : **METALLGESELLSCHAFT AG**
**Reuterweg 14 Postfach 3724**
**D-6000 Frankfurt/M.1 (DE)**

(72) Erfinder : **Hartmann, Horst, Dr.**
**Leopoldsweg 27**
**D-6380 Bad Homburg (DE)**
Erfinder : **Beckmann, Manfred**
**Jean-Philippe-Anl. 17**
**D-6078 Neu-Isenburg (DE)**
Erfinder : **Bauer, Walter**
**Am Haingraben 4**
**D-6361 Reichelsheim (DE)**

(74) Vertreter : **Fischer, Ernst, Dr.**
**Reuterweg 14**
**D-6000 Frankfurt am Main 1 (DE)**

**Beschreibung**

Die Erfindung betrifft ein Verfahren zur Herstellung von grobkristallinem, reinem Kaliumchlorid aus einer Rohlösung, die Natriumchlorid und andere Verunreinigungen enthält, durch mehrstufige Entspannungsverdampfung der heißen Lösung unter Vakuum und Weiterverarbeitung durch Trocknung des kistallinen Kaliumchlorids, Trennung in Kornfraktionen, Kompaktieren der feinen Fraktionen sowie Kühlung und Aminisierung des Endprodukts.

Es ist bekannt, kristallisiertes Kaliumchlorid aus Rohlösungen, die Natriumchlorid und andere Verunreinigungen enthalten, durch Kühlung der Lösung unter Vakuum zu gewinnen. Infolge der Wasserverdampfung, wird der Lösung die Verdampfungswärme entzogen und diese dadurch abgekühlt. Der erzeugte Dampf wird zur Erwärmung der Betriebslauge nutzbar gemacht (DE-B-10 59 418).

Bei diesen und ähnlichen Verfahren ist nachteilig, daß bei der Abkühlung kleinere Kristalle entstehen als z. B. bei der Kristallisation in Standgefäßen. Das gewonnene Kaliumchlorid neigt außerdem dazu, beim Lagern zu erhärten. Ein weiterer Nachteil besteht darin, daß das Kristallisat kleinere Mengen Natriumchlorid enthält und dem Kristallisat noch Betriebslauge anhaftet.

Diese Verunreinigungen können durch Decken des Kaliumchlorids mit nicht Kaliumchlorid lösenden Flüssigkeiten vermindert werden. Diese Deckungsoperation erfolgt in der Regel in zwei Stufen, wobei durch Wasserzugabe zunächst die Nebenbestandteile gelöst werden, und eine Decklauge erzeugt wird, die in einem weiteren Arbeitsgang vom Bodenkörper, bestehend aus Kaliumchlorid, abgetrennt wird (Freiberger Forschungshefte, A 267, Seite 191/192, Leipzig 1963). Allerdings verschlechtert die Gegenwart von Magnesiumchlorid und Magnesiumsulfat in der Decklauge die Deckwirkung (Winnacker-Küchler, Chemische Technologie, Band 1, 3. Auflage, Seite 127, 1970).

Der Erfindung liegt die Aufgabe zugrunde, diese und andere Nachteile des Standes der Technik zu vermeiden und grobkristallines Kaliumchlorid in hoher Reinheit und hoher Ausbeute aus Rohlösungen zu gewinnen, die Natriumchlorid und andere Verunreinigungen enthalten. Das Verfahren soll wirtschaftlich und umweltfreundlich sein.

Diese Aufgabe wird erfindungsgemäß dadurch gelöst, daß Kaliumchlorid aus einer oder mehreren Stufen der Entspannungsverdampfung mit niedriger Lösungstemperatur in Form von Salzbrei und in Form einer heißen, hochkonzentrierten Lösung, hergestellt aus dem bei der Weiterverarbeitung feinkörnig oder staubförmig anfallenden, als Produkt nicht brauchbaren trockenem Kaliumchlorid in die Rohlösung vor deren Eintritt in die Entspannungsverdampfung zurückgeführt wird, die rückgeführten Kaliumchloridströme derartig aufeinander abgestimmt werden, daß die sich einstellende Mischtemperatur im wesentlichen mit der Temperatur der Rohlösung übereinstimmt und zumindest ein Teil der Produktionsmenge an Kaliumchlorid aus einer oder mehreren Stufen der Gleichstrom-Entspannungsverdampfung mit höherer Lösungstemperatur abgezogen und der Weiterverarbeitung zugeführt wird.

Bevorzugt wird hierbei der Salzbrei vor der Rückführung in die Rohlösung auf 50 bis 70 Gew.% Kaliumchlorid und 30 bis 50 Gew.% Wasser eingeengt.

Die in die Rohlösung zurückgeführte Lösung der als Produkt nicht brauchbaren Kaliumchloridmengen, enthält zweckmäßigerweise 10 bis 30 Gew.% Kaliumchlorid.

Eine Weiterbildung der Erfindung besteht darin, daß die bei der Abtrennung der Kaliumchlorid-Produktionsmengen anfallenden Mutterlaugen jeweils in die Stufe der Entspannungsverdampfung zurückgeführt werden, aus der sie abgezogen wurden.

Die Trocknung und Kühlung erfolgt zweckmäßigerweise durch Luftströme, wobei das mitgeführte feinkörnige oder staubförmige Kaliumchlorid mittels Fliehkraft und Naßwäsche aus dem Luftstrom abgetrennt, gelöst und in hochkonzentrierter, heißer Lösung in die Rohlösung zurückgeführt wird.

Weitere zweckmäßige Maßnahmen im Zusammenhang mit dem erfindungsgemäßen Verfahren ergeben sich aus den Unteransprüchen 8 bis 11.

Die mit der Erfindung erzielten Vorteile bestehen insbesondere darin, daß es nach einem einfachen und übersichtlichen Verfahren gelingt, grobkristallines Kaliumchlorid mit einheitlicher Korngröße von etwa $d' = 1{,}0$ bis $2{,}0$ mm und frei von staubförmigen Anteilen herzustellen. Das Verfahren ist besonders wirtschaftlich und umweltfreundlich. Es werden keine schädlichen Staubteilchen oder andere Stoffe in die Atmosphäre abgegeben. Durch die Rückführung von Kaliumchlorid in die heiße Rohlösung vor deren Eintritt in die erste Stufe des Verfahrens, werden alle im Verfahren anfallenden feinkristallinen Anteile an Kaliumchlorid zur Bildung grobkristallinen Kaliumchlorids herangezogen.

Durch die Rückführung von Kaliumchlorid aus einer der letzten Stufen, in der der Kaliumchloridgehalt niedrig, die Temperatur mäßig und das Kristallwachstum gering ist, so daß nur feine Kristalle gebildet werden, in die erste oder eine der ersten Stufen mit höherer Temperatur, wird das hier stattfindende schnellere Kristallwachstum, das zur Bildung grober Kristalle führt, ausgenutzt. Hierdurch wird nicht nur die Ausbeute an groben Kristallen erhöht und der Verlust an Kaliumchlorid minimal gehalten, sondern auch die Einheitlichkeit der Korngröße verbessert.

Zwar ist bekannt, aus den letzten Stufen gewisse Salzmengen zurückzuführen, doch wurde dies bisher nur zur Auslösung der Kristallisation angewandt. Die dabei zurückgeführte Salzmenge ist unbedeutend im Vergleich zur Gesamtproduktion. Bei dem erfindungsgemäßen Verfahren werden jedoch bis zu einem Drittel und mehr der Gesamtproduktion an Kaliumchlorid zurückgeführt.

In dem beigefügten Flußdiagramm ist ein Ausführungsbeispiel der Erfindung schematisch dargestellt und wird im folgenden näher erläutert.

Über die Leitung 1 wird dem Puffer 14 Rohlösung zugeführt. Außerdem werden aus der Eindickvorrichtung 15 Salzbrei und aus dem Löseapparat 13 heiße, hochkonzentrierte Lösung in den Puffer eingeführt. Das Gemisch wird aus dem Puffer über die Leitung 1' in die mit 2 bezeichnete Entspannungsverdampfungs-Anlage eingeführt, die im dargestellten Ausführungsbeispiel die Stufen I bis VII umfaßt. Druck und Temperatur nehmen in Strömungsrichtung von Stufe zu Stufe ab. Die abgezogenen Brüden der ersten vier Stufen werden in Oberflächenkondensatoren 3 zum Aufwärmen der Löselauge benutzt, die aus Stufe VII abgezogen wird. Die Brüden aus den Stufen V bis VII werden in Mischkondensatoren 4 zum Aufwärmen von Kühlwasser (Leitung 21) benutzt. Aus der Stufe IV wird mittels Salzbreipumpe 17 ein Teil der Produktionsmenge in eine der beiden Zentrifugen 5 gefördert und die dort abgetrennte Mutterlauge in die Stufe IV zurückgepumpt. Aus der Stufe VII wird ein weiterer Teil der Produktionsmenge in die zweite Zentrifuge 5 gefördert und die hier anfallende Mutterlauge in die Stufe VII zurückgepumpt. Außerdem wird aus der Stufe VII Salzbrei in die Eindickvorrichtung 15 zurückgefördert, wobei auch hier der Oberlauf über die Leitung 16 in die Stufe VII zurückgeführt wird.

Das in den Zentrifugen 5 abgeschiedene feuchte Kaliumchlorid wird nacheinander dem Trockner 6, der Siebmaschine 7, dem Kühler 10 und der Aminisierungseinrichtung 19 zugeführt, bevor es über den Abzug 24 als Produkt in Behälter abgefüllt oder ein Silo eingebracht wird. Das in der Siebmaschine anfallende Feingut wird einer Kompaktiereinrichtung 8 zugeführt, dann in einem Wirbelbettkühler 9 mit Luft gekühlt und schließlich ebenfalls der Aminisiereinrichtung zugeführt. Die zur Trocknung und Kühlung benötigte Luft, erreicht über eine Sammelleitung einen Zyklonabscheider 11 und einen Naßwäscher 12, bevor sie in die Atmosphäre abgegeben wird. Über die Leitung 22 wird Kondensat oder Frischwasser sowohl in den Naßwäscher 12 als auch in den Löseapparat 13 eingeführt. Die im Zyklonabscheider 11 und im Naßwäscher 12 anfallenden Kaliumchloridmengen werden in dem Löseapparat 13 unter Zusatz von Frischdampf (Leitung 23) zu einer heißen, hochkonzentrierten Lösung verarbeitet, die in den Puffer 14 zurückgeführt wird.

Zur weiteren Erläuterung des Flußdiagramms dienen die folgenden Zahlen eines Ausführungsbeispiels.

Die Rohlösung (Leitung 1) enthält 210 g KCl/l, 170 g/l NaCl und ferner etwa 51 g $MgCl_2$/l und etwa 5 g $CaSO_4$/l. Sie weist eine Temperatur von etwa 95 °C auf und ist damit an NaCl gesättigt. Die Sättigungstemperatur der Rohlösung für KCl beträgt etwa 76,5 °C. In den Stufen I bis VII der Entspannungsverdampfungs-Anlage fallen rund 175 t/h Brüden an. Das in den Zentrifugen abgetrennte Kaliumchlorid wird im Trockner bis auf eine Restfeuchte von ca. 0,15 Gew.% $H_2O$ getrocknet. Das in der Siebmaschine anfallende Feingut kleiner 1,0 mm wird in der Kompaktiereinrichtung auf eine Korngröße von 1 bis 4 mm verarbeitet und danach im Wirbelbettkühler mittels Luft auf etwa 60 °C gekühlt und gleichzeitig abgerundet und vergleichmäßigt.

Im Löseapparat wird eine an KCl nahezu gesättigte Lösung von ca. 100 bis 108,5 °C hergestellt. Rohlösung, rückgeführter Salzbrei und rückgeführte heiße Lösung aus dem Löseapparat werden mengenmäßig derartig aufeinander abgestimmt, daß eine Mischtemperatur von etwa 95 °C erreicht wird. Die Zusammensetzung der Mischlösung ist etwa folgende :

| | | |
|---|---|---|
| KCl | 237 g/l | 18,8 Gew.-% |
| NaCl | 165 g/l | 13,1 Gew.-% |
| $MgCl_2$ | 50 g/l | 4,0 Gew.-% |
| $CaSO_4$ | 5 g/l | 0,4 Gew.-% |
| $H_2O$ | 802 g/l | 63,7 Gew.-% |
| Gesamt | 1.259 g/l | 100,0 Gew.-% |

Diese Mischlösung ist an Kaliumchlorid bei etwa 90,5 °C gesättigt, an Natriumchlorid um ca. 6,5 g/l untersättigt. Unter diesen Verhältnissen liegt der Kristallisationsbeginn auf jeden Fall in der ersten Entspannungsverdampfungs-Stufe.

Bei der Rückführung der Mutterlösung in die Stufen IV und VII wird Brüdenkondensat zugefügt, um die in der Mutterlösung vorhandenen Keime und das Feinsalz zu verlösen. Außerdem wird allen Stufen Brüdenkondensat zur Unterdrückung eines NaCl-Ausfalles zugeführt.

Erfolgt die Entnahme des gesamten produzierten Kaliumchlorids bereits vor der letzten Stufe, so wird das in der letzten Stufe (VII) vorhandene auskristallisierte Kaliumchlorid insgesamt zur Aufstärkung der Rohlösung in den Puffer zurückgeführt. Durch die Rückführung des Salzbreis aus den Stufen mit niederer Temperatur und geringer Kristallwachstumsgeschwindigkeit sowie der heißen Lösung aus dem Löseapparat zur Anhebung des KCl-Gehaltes der Rohlösung, wird die Kristallisation in den Anlagebereich mit höherer Temperatur verlagert, wodurch ein Produkt mit größerer mittlerer Korngröße erzeugt wird.

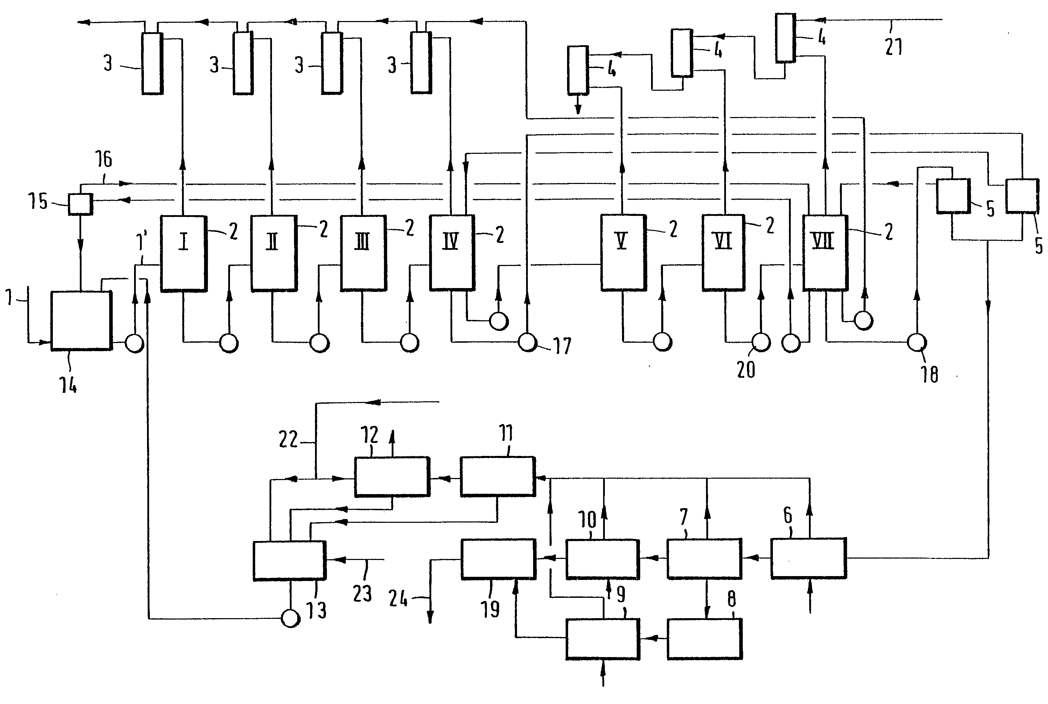

**Patentansprüche**

1. Verfahren zur Herstellung von grobkristallinem, reinem Kaliumchlorid aus einer Rohlösung, die Natriumchlorid und andere Verunreinigungen enthält, durch mehrstufige Entspannungsverdampfung der heißen Lösung unter Vakuum, und Weiterverarbeitung durch Trocknung des kristallinen Kaliumchlorids, Trennung in Kornfraktionen, Kompaktieren der feinen Fraktionen sowie Kühlung und Aminisierung des Endprodukts, dadurch gekennzeichnet, daß

(1) Kaliumchlorid

a) aus einer oder mehreren Stufen der Entspannungsverdampfung mit niedriger Lösungstemperatur in Form von Salzbrei und

b) in Form einer heißen, hochkonzentrierten Lösung, hergestellt aus dem bei der Weiterverarbeitung feinkörnig oder staubförmig anfallenden, als Produkt nicht brauchbaren trockenem Kaliumchlorid in die Rohlösung vor deren Eintritt in die Entspannungsverdampfung zurückgeführt wird,

(2) die rückgeführten Kaliumchloridströme derartig aufeinander abgestimmt werden, daß die sich einstellende Mischtemperatur im wesentlichen mit der Temperatur der Rohlösung übereinstimmt und

(3) zumindest ein Teil der Produktionsmenge an Kaliumchlorid aus einer oder mehreren Stufen der Gleichstrom-Entspannungsverdampfung mit höherer Lösungstemperatur abgezogen und der Weiterverarbeitung zugeführt wird.

2. Verfahren nach Anspruch 1, dadurch gekennzeichnet, daß der Salzbrei vor der Rückführung in die Rohlösung auf 50 bis 70 Gew.% Kaliumchlorid und 30 bis 50 Gew.% Wasser eingeengt wird.

3. Verfahren nach Anspruch 1 oder 2, dadurch gekennzeichnet, daß die in die Rohlösung rückgeführte Lösung der als Produkt nicht brauchbaren Kaliumchloridmengen 10 bis 30 Gew.% Kaliumchlorid enthält.

4. Verfahren nach einem der Ansprüche 1 bis 3, dadurch gekennzeichnet, daß in jeder Stufe der Entspannungsverdampfung ein Überlauf vorgesehen ist, aus welchem das in der Überlauflösung vorhandene feinkristalline Kaliumchlorid größtenteils abgetrennt, mittels Kondensat gelöst und in die jeweilige Stufe zurückgeführt wird.

5. Verfahren nach einem der Ansprüche 1 bis 4, dadurch gekennzeichnet, daß die bei der Abtrennung der Kaliumchlorid-Produktionsmengen anfallenden Mutterlaugen jeweils in die Stufe der Entspannungsverdampfung zurückgeführt werden, aus der sie abgezogen wurden.

6. Verfahren nach Anspruch 5, dadurch gekennzeichnet, daß das in den Mutterlaugen nach Abtrennung der Kaliumchlorid-Produktionsmengen verbleibende feinkristalline Kaliumchlorid vor Rückführung in die Entspannungsverdampfung durch Zugabe von Kondensat gelöst wird.

7. Verfahren nach einem der Ansprüche 1 bis 6, dadurch gekennzeichnet, daß die Trocknung und Kühlung durch Luftströme erfolgt, daß das mitgeführte feinkörnige oder staubförmige Kaliumchlorid mittels Fliehkraft und Naßwäsche aus dem Luftstrom abgetrennt, gelöst und in hochkonzentrierter, heißer Lösung in die Rohlösung zurückgeführt wird.

8. Verfahren nach Anspruch 7, dadurch gekennzeichnet, daß die bei der Naßwäsche anfallende kaliumchlorid-haltige Waschlösung zum Verlösen der mittels Fliehkraft aus dem Luftstrom abgetrennten Kaliumchloridmengen benutzt wird.

9. Verfahren nach Anspruch 7 oder 8, dadurch gekennzeichnet, daß die anfallende Lösung mittels Frischdampf bis nahe an die Siedetemperatur erhitzt wird.

10. Verfahren nach einem der Ansprüche 1 bis 9, dadurch gekennzeichnet, daß die gesamte Produktionsmenge an Kaliumchlorid aus Stufen der Entspannungsverdampfung mit höherer Temperatur abgezogen wird.

11. Verfahren nach Anspruch 10, dadurch gekennzeichnet, daß der Salzbrei nur aus der letzten Stufe der Entspannungsverdampfung abgezogen und in die Rohlösung zurückgeführt wird.

**Claims**

1. A process of producing coarsely crystalline, pure potassium chloride from a raw solution, which contains sodium chloride and other impurities, wherein the hot solution is flash-evaporated under a vacuum in a plurality of stages, and a further processing comprises drying the crystalline potassium chloride, separation into particle size fractions, compacting the fine fractions and cooling and aminating the end product, characterized in that

(1) potassium chloride

a) consisting of salt pulp from one or more flash evaporation stages operated at a low solution temperature and

b) consisting of a highly concentrated hot solution made from the fine-grained or dustlike, dry potassium chloride which becomes available during the further processing and cannot be used as a product,

is recycled to the raw solution before the latter enters the flash evaporation means,

(2) the recycled potassium chloride streams are so adjusted relative to each other that the resulting temperature of the mixed streams substantially agrees with the temperature of the raw solution, and

**0 088 471**

(3) at least part of the quantity of potassium chloride product is withdrawn from one or more of those cocurrently operated flash evaporation stages, which are operated at a higher solution temperature.

2. A process according to claim 1, characterized in that the salt pulp is evaporated to contain 50 to 70 wt.% potassium chloride and 30 to 50 wt.% water before said pulp is recycled to the raw solution.

3. A process according to claim 1 or 2, characterized in that the quantities of potassium chloride which cannot be used as a product are recycled to the raw solution as a solution-containing 10 to 30 wt.% potassium chloride.

4. A process according to any of claims 1 to 3, characterized in that each flash evaporation stage is provided with an overflow and most of the finely crystalline potassium chloride contained in the overflowing solution is separated, dissolved in condensate and recycled to the same stage.

5. A process according to any of claims 1 to 4, characterized in that each of the mother liquors which become available after the separation of the quantities of potassium chloride product is recycled to that flash evaporation stage from which the mother liquor has been withdrawn.

6. A process according to claim 5, characterized in that the finely crystalline potassium chloride which remains in the mother liquors from which the quantities of potassium chloride product have been separated is dissolved by an addition of condensate before it is recycled to the flash evaporation means.

7. A process according to any of claims 1 to 6, characterized in that drying and cooling are effected by air streams, the entrained fine-grained or dustlike potassium chloride is separated from the air stream by centrifugal force of wet scrubbing and is dissolved and is recycled to the raw solution in a highly concentrated, hot solution.

8. A process according to claim 7, characterized in that the potassium chloride containing absorbent solution resulting from the wet scrubbing is used to dissolve the quantities of potassium chloride which have been separated from the air stream by centrifugal force.

9. A process according to claim 7 or 8, characterized in that the resulting solution is heated close to its boiling temperature by means of live steam.

10. A process according to any of claims 1 to 9, characterized in that the total quantity of potassium chloride product is withdrawn from flash evaporation stages operated at a relatively high temperature.

11. A process according to claim 10, characterized in that the salt pulp is withdrawn only from the last flash evaporation stage and recycled to the raw solution.

## Revendications

1. Procédé de préparation de chlorure de potassium pur en gros cristaux à partir d'une solution brute qui contient du chlorure de sodium et d'autres impuretés, par évaporation sous vide avec détente, en plusieurs stades, de la solution chaude, et traitement ultérieur par séchage du chlorure de potassium en cristaux, séparation en fractions granulométriques, compactage des fractions fines, ainsi que refroidissement et amination du produit final, caractérisé en ce qu'il consiste :

(1) à recycler dans la solution brute, avant son entrée dans l'évaporation avec détente, du chlorure de potassium.

a) provenant d'un ou de plusieurs étages de l'évaporation avec détente, ayant un bas point de dissolution et sous forme de purée de sel et

b) sous forme d'une solution chaude, très concentrée, préparée à partir du chlorure de potassium sec qui n'est pas utilisable comme produit

et qui se produit sous forme de grains fins ou sous forme de poussières lors du traitement ultérieur,

(2) à harmoniser les courants de chlorure de calcium recyclés l'un à l'autre de manière à ce que la température du mélange qui s'établit coïncide sensiblement avec la température de la solution brute, et

(3) à soutirer au moins une partie de la quantité de production de chlorure de potassium, qui a un point de dissolution assez élevé, d'un ou de plusieurs étages de l'évaporation avec détente en courant de même sens, et à l'envoyer à un traitement ultérieur.

2. Procédé suivant la revendication 1, caractérisé en ce qu'il consiste à concentrer la purée de sels avant de la recycler dans la solution brute jusqu'à ce qu'elle contienne de 50 à 70 % en poids de chlorure de potassium, et de 30 à 50 % en poids d'eau.

3. Procédé suivant la revendication 1 ou 2, caractérisé en ce que la solution recyclée des quantités de chlorure de potassium qui ne sont pas utilisables comme produit, qui est recyclée dans la solution brute, contient de 10 à 30 % en poids de chlorure de potassium.

4. Procédé suivant l'une des revendications 1 à 3, caractérisé en ce qu'il consiste à prévoir, dans chaque étage de l'évaporation avec détente, un trop-plein dans lequel le chlorure de potassium à cristal fin se trouvant dans la solution de trop-plein est séparé, pour la plus grande partie, est dissous au moyen d'un produit de condensation, et est recyclé à l'étage respectif.

5. Procédé suivant l'une des revendications 1 à 4, caractérisé en ce qu'il consiste à recycler à l'étage respectif de l'évaporation avec détente, dont elles ont été soutirées, les lessives-mères se produisant lors de la séparation des quantités de production de chlorure de potassium.

6. Procédé suivant la revendication 5, caractérisé en ce qu'il consiste à dissoudre, avant le recyclage

5

dans l'évaporation avec détente et par addition de produit de condensation, le chlorure de potassium à cristaux fins restant dans les lessives-mères après la séparation des quantités de production de chlorure de potassium.

7. Procédé suivant l'une des revendications 1 à 6, caractérisé en ce qu'il consiste à effectuer le séchage et le refroidissement par des courants d'air, à séparer du courant d'air le chlorure de potassium entraîné sous forme de grains fins ou sous forme de poussières, au moyen de la force centrifuge et d'un lavage par voie humide, à le dissoudre et à le recycler en une solution chaude très concentrée dans la solution brute.

8. Procédé suivant la revendication 7, caractérisé en ce qu'il consiste à utiliser la solution de lavage contenant du chlorure de potassium, se produisant lors du lavage par voie humide, pour dissoudre les quantités de chlorure de potassium séparées du courant d'air au moyen de la force centrifuge.

9. Procédé suivant la revendication 7 ou 8, caractérisé en ce qu'il consiste à porter, au moyen de vapeur vive, la solution qui se produit jusqu'au voisinage du point d'ébullition.

10. Procédé suivant l'une des revendications 1 à 9, caractérisé en ce qu'il consiste à soutirer à une température assez élevée toute la quantité de production de chlorure de potassium des étages de l'évaporation avec détente.

11. Procédé suivant la revendication 10, caractérisé en ce qu'il consiste à soutirer et à recycler dans la solution brute de la purée de sels qui provient du dernier étage de l'évaporation avec détente.

1